# EUROPÄISCHE PATENTANMELDUNG

(11) **EP 2 294 920 A2**
(43) Veröffentlichungstag der Anmeldung: **16.03.2011**
(21) Anmeldenummer: 10009306.1
(22) Anmeldetag: 07.09.2010
(51) Int. Cl.: A21C 9/04, A21C 15/00

(54) **Vorrichtung und Verfahren zum Belegen zumindest eines Abschnitts eines Lebensmittels**

(30) Priorität: 09.09.2009 DE 202009012319 U
(71) Anmelder: SKS Sondermaschinen- und Fördertechnikvertriebs- GmbH, 10245 Berlin (DE)
(72) Erfinder: Kostajnsek, Anton, 12527 Berlin (DE); Mollath, Günter, 10623 Berlin (DE)
(74) Vertreter: Patentanwälte Bressel und Partner

(57) **Zusammenfassung**

Die Erfindung betrifft eine Vorrichtung und ein Verfahren zum Belegen zumindest eines Abschnitts eines Lebensmittels (1) mit mindestens einer Belegkomponente, umfassend mindestens eine Aufbringvorrichtung, wobei die Aufbringvorrichtung über einer Auflage (2) für das Lebensmittel (1) anordenbar ist, wobei der Aufbringvorrichtung die Belegkomponente über mindestens einen Einlassabschnitt (4) zuführbar ist, wobei der Aufbringvorrichtung mindestens ein die Belegkomponente enthaltender Fluid-Masse-Strom (14) zuführbar ist und die Aufbringvorrichtung als Fliehkraftabscheider (3) ausgebildet ist.

## Beschreibung

Die Erfindung betrifft eine Vorrichtung und ein Verfahren zum Belegen zumindest eines Abschnitts eines Lebensmittels mit mindestens einer Belegkomponente.

Das Belegen von Lebensmitteln oder Abschnitten von Lebensmitteln mit Belegkomponenten wird in der Regel nicht mehr manuell sondern automatisiert durchgeführt. So existieren beispielsweise Vorrichtungen zum Belegen oder Aufstreuen von Käse oder Käseflocken auf Pizzen. Auch andere Belegkomponenten können mit Hilfe von entsprechenden Vorrichtungen auf Lebensmittel aufgebracht werden, z.B. gefrorenes Hackfleisch, Obst- oder Gemüsestücke, Zucker, Puderzucker oder Mehl. Solche Belegkomponenten können dabei beispielsweise auf Backwaren oder Teigwaren aufgebracht werden.

In der DE 10 2007 005 735 A1 wird eine Vorrichtung zum Dekorieren oder Belegen eines Horizontalabschnitts einer flachen Backware offenbart. Die Vorrichtung umfasst einen Endlosförderer zum Transport der Backwaren entlang einer Produktionslinie, mindestens eine Station zum Aufbringen mindestens einer Streukomponente und mindestens eine folgende Station zum Aufbringen mindestens einer Stückkomponente. Die mindestens eine Station zum Aufbringen der mindestens einen Streukomponente weist hierbei eine Leiteinrichtung auf, die beim Aufbringen der Streukomponente mindestens eine Freifläche auf dem Horizontalabschnitt erzeugt. Die mindestens eine Station zum Aufbringen der mindestens einen Stückkomponente weist eine Abgabeeinrichtung für die gezielte Abgabe der Stückkomponente in die mindestens eine Freifläche auf. Hierbei wird auch offenbart, dass die Station zum Aufbringen der mindestens einen Streukomponente über dem Endlosförderer angeordnet ist und dass die Streukomponente, beispielsweise geriebener Käse, im so genannten Wasserfallverfahren aufgetragen wird.

Die EP 1 875 805 A1 offenbart eine Vorrichtung zum Belegen eines Teigbodens wie ein Pizzaboden, Kuchenboden oder dergleichen mit Zutaten wie geriebenen/geraspelten Käse, Schinken, Wurst, Fleisch, Fisch, Gemüse etc, mit einem Trägerbauteil, im Einsatz über dem Teigboden angeordnet, wobei das Trägerbauteil folgende Komponenten aufweist: einen mit einem öffenbaren Verschluss versehenen Formatbehälter, der dazu geeignet ist, eine vorbestimmte Menge Zutaten aufzunehmen, sowie mindestens einen Rechen mit Zinken, der darauf angepasst ist, die Zutaten beim Herunterfallen entlang eines Zutatenpfades zu zerstreuen.

Die AT 375 813 offenbart eine Berieselungseinrichtung und ein Verfahren zum Aufbringen von Rieselgut auf die Oberfläche eines Teigstückes. Das Rieselgut wird hierbei ähnlich einem Wasserfall aufgebracht. Die Berieselungseinrichtung weist einen Vorratstrichter für das Rieselgut auf, der über einem Transportband angeordnet ist. An dem unteren Ende des Vorratstrichters ist eine mit einer rauen Oberfläche rotierende Walze angeordnet, von der eine parallel zu dieser angeordnete und entgegengesetzt zur Drehrichtung der Walze umlaufende Bürste das Rieselgut abnimmt. Weiter offenbart die Druckschrift, dass eine Rückfördereinrichtung zur Rückförderung des Rieselguts von einem Auffangbehälter zu den Berieselungseinrichtungen als pneumatische Fördereinrichtung ausgebildet ist. Das überschüssige Rieselgut wird mittels eines Sauggebläses aus dem Auffangbehälter in einen Zyklon gesaugt und dort abgeschieden. Vom Zyklon gelangt das Rieselgut über Fallrohre in die Vorratstrichter der Berieselungseinrichtungen.

Die Belegkomponente wird den existierenden Vorrichtungen zum Belegen in der Regel manuell oder mit Hilfe eines Förderbandes zugeführt. Hierbei kann die Belegkomponente vor dem Aufbringen mit Hilfe der Vorrichtung zum Belegen noch in einem Behälter bevorratet werden. Oftmals ergibt sich hierbei nachteilig ein Verkleben oder Verklumpen der Belegkomponente beim Zuführen oder Bevorraten der Belegkomponenten.

Es stellt sich das technische Problem, eine Vorrichtung zum Belegen mindestens eines Abschnitts eines Lebensmittels mit einer vorbestimmten Menge mindestens einer Belegkomponente zu schaffen, die ein gewünschtes, insbesondere gleichmäßiges, insbesondere auch randfreies Verteilergebnis ermöglicht sowie möglichst wenig Reste der Belegkomponente beim Belegen des Lebensmittels erzeugt und bei der beim Zuführen der Belegkomponente und/oder bei einer Bevorratung kein Verklumpen oder Verkleben der Belegkomponente auftritt.

Zur Lösung dieses Problems dient eine erfindungsgemäße Vorrichtung zum Belegen zumindest eines Abschnitts eines Lebensmittels mit mindestens einer Belegkomponente. Die Vorrichtung umfasst mindestens eine Aufbringvorrichtung, wobei die Aufbringvorrichtung über einer Auflage für das Lebensmittel anordenbar ist, wobei der Aufbringvorrichtung die Belegkomponente über mindestens einen Einlassabschnltt zuführbar ist, wobei der Aufbringvorrichtung mindestens ein die Belegkomponente enthaltender Fluid-Masse-Strom zuführbar ist und die Aufbringvorrichtung als Fliehkraftabscheider ausgebildet ist.
Das Lebensmittel ist hierbei auf der Auflage anordenbar. Durch die Anordnung der Aufbringvorrichtung über der Auflage wird in vorteilhafter Weise ermöglicht, dass die Belegkomponente auf ein auf der Auflage angeordnetes Lebensmittel herabfallen kann. Die Integration der Belegkomponente in einen Fluid-Masse-Strom ermöglicht in vorteilhafter Weise einen Transport der Belegkomponente, wobei ein Verklumpen oder Verkleben der Belegkomponente, z.B. von Käsespänen oder Käsegranulat beim Belegen von Pizza, verhindert wird. Weiterhin ermöglicht der Fluid-Masse-Strom, dass die Belegkomponente auch über weite Strecken zur Aufbringvorrichtung transportiert werden kann. Bevorzugt ist der Fluid-Masse-Strom ein Luft-Masse-Strom, wobei die Luft als Transportmedium für die Belegkomponente (die Masse) dient. Die Ausbildung der Aufbringvorrichtung als Fliehkraftabscheider ermöglicht in diesem Fall die Trennung von Belegkomponente und Fluidstrom, beispielsweise die Trennung von Luftstrom und Im Luftstrom transportierten Käsespänen. Die Trennung von Belegkomponente und Fluidstrom verhindert, dass schon vor dem Aufbringen der Belegkomponente auf der zu belegenden Fläche des Lebensmittels vorhandene Komponenten durch den Luftstrom beeinträchtigt, z.B. weggeblasen, werden. Der Fllehkraftabscheider ermöglicht hierbei in besonders vorteilhafter Weise eine Trennung von Belegkomponente und Fluidstrom, ohne dass z.B. ein Verklumpen oder Verkleben der Belegkomponente bel der Trennung eintritt. Der Fliehkraftabscheider umfasst hierbei mindestens vier Abschnitte. Erstens umfasst der Fliehkraftabscheider einen Einlaufabschnitt, beispielsweise einen Einlaufzylinder. Über den Einlaufabschnitt ist dem Fliehkraftabscheider ein Fluid-Masse-Strom zuführbar. In der Regel ist der Einlaufabschnitt an einem oberen Ende des Fliehkraftabscheiders angeordnet. Weiter wird über den Einlaufabschnitt der Fluid-Masse-Strom dem Fliehkraftabscheider tangential zu einem Verlauf einer Außenwand des Fliehkraftabscheiders an einer Innenseite der Außenwand entlang zugeführt. Zweitens umfasst der Fliehkraftabscheider einen Kegelabschnitt, wobei sich der Kegelabschnitt von einem oberen Ende des Fliehkraftabscheiders zu einem unteren Ende des Fliehkraftabscheiders hin verjüngt. Als drittes Element umfasst der Fliehkraftabscheider eln Tauchrohr, welches zur Abführung des Fluids, beispielsweise von Luft, des Fluid-Masse-Stroms dient. Viertens umfasst der Fliehkraftabscheider einen Auslassabschnitt, der an einem unteren Ende des Fliehkraftabscheiders angeordnet ist. Über den Auslassabschnitt ist die Belegkomponente (die Masse) aus dem Fliehkraftabscheider abführbar. Ist der Fliehkraftabscheider über der Auflage angeordnet, so fällt die Belegkomponente, die durch den Fliehkraftabscheider aus dem Fluid-Masse-Strom herausgefiltert wurde, durch den Auslassabschnitt aus dem Fliehkraftabscheider auf die aufiage oder ein auf der Auflage angeordnetes Lebensmittel.

Vorzugsweise wird der Fluidstrom In einem geschlossenen Kreislauf geführt, wobei innerhalb des Kreislaufs weitere Elemente wie z.B. eine Pumpe und/oder ein Trockner und/oder Filter angeordnet sein können. Ist z.B. ein Trockner zum Entzug von Kondenswasser und zur Entkeimung im Kreislauf des Fluidstroms angeordnet, so können z.B. auch Tiefkühlwaren im Fluidstrom transportiert und mittels der erfindungsgemäßen Vorrichtung auf dem Lebensmittel aufgebracht werden.

Die vorgeschlagene Vorrichtung ermöglicht in vorteilhafter Weise ein gezieltes gleichmäßiges Belegen des Lebensmittels, z.B. ein ausschließliches Belegen bestimmter Abschnitte des Lebensmittels, mit einer vorbestimmten Menge der Belegkomponente, ohne dass diese verkleben oder verklumpen kann.

Der Auslassabschnitt, insbesondere eine Öffnungsfläche des Auslassabschnitts, kann hierbei kleiner als die Oberfläche des zu belegenden Abschnitts des Lebensmittels sein. Hierdurch kann in besonders vorteilhafter Weise ein randfreies Belegen des Lebensmittels mit der Belegkomponente erreicht werden.

Beispielsweise kann der Fliehkraftabscheider an einem C-förmlgen Montagegestell angebracht sein. Das C-förmige Montagegestell ist seitlich von der Auflage anordenbar und ermöglicht in vorteilhafter Weise, dass der Fliehkraftabscheider in einfacher Weise über der Auflage angeordnet werden kann. Weiter ermöglicht das C-förmige Montagegestell, dass der Fliehkraftabscheider in einfacher Weise von der Auflage entfernt werden kann, beispielsweise zu Reinigungszwecken.

Weiter ist vorstellbar, dass die Auflage und die Aufbringvorrichtung (der Fliehkraftabscheider) relativ zueinander bewegbar sind. Insbesondere kann die Auflage ein Förderband sein, wobei das zu belegende Lebensmittel auf dem Förderband transportierbar ist.

In einer Ausführungsform kann der Einlassabschnitt derart ausgebildet und/oder am Fliehkraftabscheider angeordnet sein, dass der Fluid-Masse-Strom dem Fliehkraftabscheider in einem vorbestimmten Winkel zu einer vertikalen Zentralachse des Fliehkraftabscheiders zuführbar ist. Hierbei ist die vertikale Zentralachse des Fliehkraftabscheiders beispielsweise die Zentralachse des Kegelabschnitts. Ein vorbestimmter Winkel kann hierbei vorzugsweise in einem Winkelbereich von 65 ° bis 80 °liegen. Besonders vorzugsweise kann der Winkelbereich für den vorbestimmten Winkel zwischen 70 ° und 75 °llegen. Hierdurch wird in vorteilhafter Weise eine besonders vollständige Filtrierung der Belegkomponente aus dem Fluid-Masse-Strom gewährleistet, insbesondere die Filtrierung von Käsespänen aus einem Luft-Masse-Strom.

In einer weiteren Ausführungsform weist der Fliehkraftabscheider mindestens einen starren oder flexiblen Auslassabschnitt auf. Unter einem flexiblen Auslassabschnitt wird hierbei verstanden, dass die Form des Auslassabschnitts veränderbar ist. Beispielsweise kann der Auslassabschnitt als biegeschlaffer Rüssel oder als Rüssel mit Sehnen ausgeführt sein. Die Belegkomponente fällt hierbei von dem Fliehkraftabscheider durch den Rüssel und eine Auslassöffnung des Rüssels auf die Auflage und/oder ein auf der Auflage angeordnetes Lebensmittel. Durch einen flexiblen Auslassabschnitt ergibt sich in vorteilhafter Weise, dass die Auslassöffnung ohne zusätzliche Bauteile, wie z.B. Gelenke, bewegbar ist. In einer alternativen Ausführungsform kann der Auslassabschnitt als starrer Rüssel oder als Rohr ausgeführt werden. Hierdurch ergibt sich in vorteilhafter Weise eine verbesserte Abführung der vom Fluidstrom getrennten Belegkomponente aus dem Fliehkraftabscheider. Um eine Auslassöffnung des Rohres bewegbar zu machen, kann der Auslassabschnitt zusätzliche Bauteile, wie z.B. Gelenke oder Schwenklager umfassen. Beispielsweise kann der Auslassabschnitt ein an einem oberen Ende des Rohres angeordnetes Gelenk umfassen, um welches das Rohr schwenkbar ist Auch ist vorstellbar, dass ein Gelenk an der Mitte des Rohres angeordnet ist, wobei das Rohr um dieses Gelenk schwenkbar ist.

In einer weiteren möglichen Ausführungsform kann der Auslassabschnitt ein Mundstück umfassen. Mittels des Mundstücks ist ein, insbesondere bei Bewegung des Auslassabschnitts und/oder des Fliehkraftabscheiders mit hoher Beschleunigung auftretender, Schleudereffekt reduzierbar, wobei der Schleudereffekt sich auf ein Schleudern und somit zumindest teilweise ungerichtete Abführung des Belegkomponente über den Auslassabschnitt bezieht. Das Mundstück kann z.B. als halbkugelförmiger Bereich an einem unteren,also dem Lebensmittel zugewandten, Ende des Auslassabschnitts angeordnet sein oder einen halbkugelförmigen Bereich umfassen.

In einer weiteren Ausführungsform ist der Fliehkraftabscheider und/oder der Auslassabschnitt mit mindestens einem Bewegungsfreiheitsgrad bewegbar. Der Bewegungsfreiheitsgrad kann hierbei ein linearer oder rotatorischer Bewegungsfreiheitsgrad sein. Ist der gesamte Fliehkraftabscheider bewegbar, so ergibt sich in vorteilhafter Weise, dass ein Krafteinleitungspunkt für eine für die Bewegung ursächliche Kraft an beliebiger Stelle des Fliehkraftabscheiders anordenbar ist. Weiter ergibt sich in vorteilhafter Weise, dass somit große Arbeitsräume zur Positionierung des Fliehkraftabscheiders abdeckbar sind. Ist der Auslassabschnitt bewegbar, so ergibt sich in vorteilhafter Weise, dass im Vergleich zur Bewegung des Fliehkraftabscheiders nur geringe Massen bewegt werden müssen, wodurch weniger Energie zur Bewegung notwendig ist.

Vorzugsweise wird der Fliehkraftabscheider im Bereich seines Schwerpunkts gelagert. Hierdurch ergibt sich in vorteilhafter Weise eine besonders einfache Bewegbarkeit des Fliehkraftabscheiders.

Die Bewegung des Fliehkraftabscheiders und/oder des Auslassabschnitts kann in verschiedenen Bewegungsbahnen relativ zur Auflage oder relativ zu einem auf der Auflage angeordneten Lebensmittel erfolgen. Beispielsweise können Bewegungsbahnen des Fliehkraftabscheiders und/oder des Auslassabschnitts mit der Auflage mitlaufend sein. Hierbei ergeben sich in vorteilhafter Weise, dass Fliehkraftabscheider und/oder der Auslassabschnitt auf Bahnen bewegt wird, die relativ zur Auflage konstant sind. Auch ist vorstellbar, dass Bewegungsbahnen nicht mit der Auflage mitiaufend sind.

Vorzugsweise ist der Fliehkraftabscheider und/oder der Auslassabschnitt mit einer Pendelbewegung über oder relativ zu der Auflage bewegbar. Die Pendelbewegung weist hierbei eine vorbestimmte Amplitude und/oder vorbestimmte Frequenz auf. Auch kann die Pendelbewegung einen vorbestimmten zeitlichen Amplitudenverlauf und/oder zeitlichen Frequenzverlauf aufweisen.

Die Pendelbewegung kann z.B. eine Sinusschwingung sein.

Die Amplitude und/oder die Frequenz können derart eingestellt werden, dass ein gewünschtes Verteilergebnis der Belegkomponenten auf dem Lebensmittel erreicht wird. Bei konstanter Amplitude führen z.B. unterschiedliche Frequenzen zu unterschiedlichen Verteilungsergebnissen. Eine Frequenz und/oder Amplitude der Pendelbewegung ist hierbei abhängig von einer Transportgeschwindigkeit einer Auflage, z.B. eines Förderbandes und/oder den Abmaßen des zu belegenden Abschnitts des Lebensmittels.

Eine hohe Frequenz der Pendelbewegung führt hierbei zu hohen Beschleunigungen, die ein Verschleudern der aus dem Fliehkraftabscheider bzw. aus dem Auslassabschnitt herausfallenden Belegkomponente führen können. Das Verschleudern kann für eine gleichmäßige Verteilung der Belegkomponenten genutzt werden, wobei zu beachten ist, dass an Umkehrpunkten der Pendelbewegung eine Verarmung der Belegkomponenten auftreten kann. Damit das Verschleudern derart genutzt werden kann und nicht zu einem ungewünschten Verteilergebnis führt, kann ein vorhergehend erläutertes Mundstück verwendet werden.

Eine niedrige Frequenz vermeidet eine solche Verarmung, führt aber eher in Bezug auf den zu belegenden Abschnitt zu lokal konzentrierten und somit eventuell ungleichmäßigen Verteilergebnissen.

Eine Pendelbewegung weist hierbei vorzugsweise eine Frequenz auf, die kleiner oder gleich 1 Hz ist, beispielsweise 1/6 Hz. Eine Amplitude der Pendelbewegung beträgt beispielsweise 60 mm.

Die Pendelbewegung kann hierbei eine Hüllkurve aufweisen, die einer halben Periodenlänge einer Sinusschwingung entspricht, wobei eine Frequenz der die Hüllkurve bildenden Sinusschwingung geringer ist als eine Frequenz der Pendelbewegung. Selbstverständllch sind auch andere Hüllkurvenformen vorstellbar, beispielsweise halbkreisförmige Hüllkurven. Durch eine Hüllkurve kann die Pendelbewegung ein möglichst vollständige Belegung eines z.B. runden, zu belegenden Lebensmittel, z.B. eines Pizzaboden, gewährleisten.

Zur Ausführung der Bewegung, insbesondere der Pendelbewegung, kann eine Drehachse der Bewegung einen Körper des Fliehkraftabscheiders schneiden oder außerhalb des Körpers, insbesondere relativ zur Auflage oberhalb des Körpers, verlaufen. Eine Einleitung der die Bewegung verursachenden Kraft bzw. des Moments kann hierbei beispielsweise am Körper des Fliehkraftabscheiders, insbesondere an einer Oberkante des Fliehkraftabscheiders, aber auch außerhalb des Körpers, insbesondere relativ zur Auflage oberhalb des Körpers, erfolgen.
Weiter ist es möglich, dass der Fliehkraftabscheider und/oder der Auslassabschnitt mit zwei Bewegungsfreiheitsgraden bewegbar ist. Hierdurch ergibt sich in vorteilhafter Weise, dass komplexere Bewegungsbahnen realisierbar sind. Beispielsweise können mit Hilfe von zwei Bewegungsfreiheitsgraden des Fliehkraftabscheiders und/oder des Auslassabschnitts oder mit Hilfe einer Kombination eines Bewegungsfreiheitsgrades und einer Bewegung der Auflage relativ zum Fliehkraftabscheider lineare, kreisförmige oder spiralförmige Bewegungsbahnen des Fliehkraftabscheiders und/oder des Auslassabschnitts realisierbar sein. Auch ist es möglich, Kombinationen aus den vorhergehend genannten Bewegungsbahnen zu realisieren. Hierfür kann der Fliehkraftabscheider und/oder der Auslassabschnitt z.B. mittels eines Kreuzgelenks gelagert werden. Durch die Bewegung des Fliehkraftabscheiders und/oder des Auslassabschnitts ergibt sich in vorteilhafter Weise, dass eine Belegung eines Lebensmittels mit einer Belegkomponente auch im Fließbetrieb möglich ist. Hierbei wird unter Fließbetrieb verstanden, dass die Auflage, z.B. ein Transportband, mit konstanter Geschwlndigkeit verfährt und zum Belegen nicht angehalten werden muss. In weiter vorteilhafter Weise ergibt sich durch die Bewegung des Fliehkraftabscheiders und/oder des Auslassabschnitts in gewünschten Bewegungsbahnen, dass eine gewünschte Verteilung der Belegkomponente auf dem Lebensmittel erreichbar ist. So ist z.B. vorstellbar, dass die Belegkomponente nur in bestimmten Teilbereichen des Lebensmittels aufgebracht wird oder das eine gleichmäßige Verteilung der Belegkomponente auf dem gesamten Lebensmittel oder Teilbereichen des Lebensmittels erreicht wird. Hierbei wird der Fliehkraftabscheider und/oder der Auslassabschnitt also bahngesteuert bewegt.

In einer weiteren Ausführungsform umfasst die Vorrichtung mindestens einen Aktor, wobei der Fliehkraftabscheider und/oder der Auslassabschnitt mittels des Aktors bewegbar ist. Hierdurch ergibt sich in vortellhafter Weise, dass eine Bewegung des Fllehkraftabscheiders und/oder des Auslassabschnitts automatisiert durchgeführt werden kann. Durch eine Automatisierung ergibt sich in vorteilhafter Weise eine Kosteneinsparung, z.B. im Vergleich mit einer manuellen Positionierung des Fliehkraftabscheiders und/oder des Auslassabschnitts. In weiter vorteilhafter Weise ergibt sich durch die Bewegung des Fliehkraftabscheiders und/oder des Auslassabschnitts durch einen Aktor eine höhere Präzision der Bewegung, auch über eine große Anzahl an Bewegungsabläufen.

Der Aktor kann hierbei als elektrischer, pneumatischer oder hydraulischer Aktor ausgeführt sein. Auch weitere Aktorarten sind vorstellbar.

Weiterhin kann der Aktor als Translations- oder Rotationsaktor ausgebildet sein.

In einer weiteren Ausführungsform umfasst die Vorrichtung mindestens ein Kraftübertragungsglied, wobei das mindestens eine Kraftübertragungsglied eine Kraft zwischen dem Aktor und dem Fliehkraftabscheider und/oder dem Auslassabschnitt überträgt. Das mindestens eine Kraftübertragungsglied kann hierbei beispielsweise als Seil oder als Stab ausgebildet sein. Durch die Anordnung eines Kraftübertragungsglledes zwischen dem Aktor und dem Fliehkraftabscheider und/oder dem Auslassabschnitt wird in vorteilhafter Weise ermöglicht, dass der Aktor in einer gewünschten Entfernung vom Fliehkraftabscheider angeordnet werden kann. Dies kann insbesondere aufgrund von Hygienevorschriften im Lebensmittelbereich notwendig sein. Das mindestens eine Kraftübertragungsglied kann hierbei beispie/sweise ein oder mehrere Getriebeeinheiten umfassen, wobei die Getriebeeinheit eine rotatorische Bewegung in eine Translationsbewegung oder eine Translationsbewegung in eine Rotationsbewegung umwandelt. Weiterhin kann die Getriebeeinheit ein Drehmoment beziehungsweise eine Kraft, eine Geschwindigkeit der Bewegung oder einen Verstellweg verändern. Weiter ist vorstellbar, den Fliehkraftabscheider und/oder den Auslassabschnitt mit Hilfe von Seilen zu bewegen. Hierbei erfolgt eine Kraftübertragung zwischen Aktor und Fliehkraftabscheider über Seile. Die Seile können hierbei beispielsweise über Umlenkrollen umgelenkt werden.

Weiter können Seile auf Winden auf- und abrollbar sein, um eine Bewegung des Fliehkraftabscheiders und/oder des Auslassabschnitts zu bewirken.

Weiter ist vorstellbar, das Seil oder die Seile über Vorspannvorrichtungen oder unter Ausnutzung der Schwerkraft vorzuspannen, um z.B. eine Bewegung des Fliehkraftabscheiders und/oder des Auslassabschnitts in zwei Richtungen zu ermöglichen.

Weiter ist vorstellbar, dass bei einer entfernten Anordnung des Aktors in Bezug auf den Fliehkraftabscheider der Aktor gekapselt wird. Hierbei wird unter Kapselung verstanden, dass der Aktor durch eine oder mehrere Schutzschichten, beispielsweise Trennwände vom Fliehkraftabscheider getrennt ist.

Vorzugsweise erfolgt eine Anordnung des mindestens einen Aktors und/oder zumindest eines Teils der Kraftübertragungsglieder in einer vorbestimmten Höhe oberhalb einer Aufstellfläche der erfindungsgemäßen Vorrichtung. Somit wird in vorteilhafter Weise gewährleistet, dass die Antriebstechnik oder Teile der Antriebstechnik oberhalb eines Arbeitsraumes von menschlichen Personen, z.B. von Qualitätskontrolleuren, angeordnet sind, wodurch sich insbesondere die Sicherheit für derartige Personen erhöht.

Auch kann die Anordnung des mindestens einen Aktors und/oder zumindest eines Teils der Kraftübertragungsglieder außerhalb eines hygienisch kritischen Bereichs, der sich in Bezug auf das Transportband, die Dosiervorrichtung und den Fliehkraftabscheider und weitere Teile der Vorrichtung ergibt, erfolgen. Hierdurch ergibt sich in vorteilhafter Weise, dass die Antriebstechnik oder Teile davon nicht notwendigerweise hyglenekritische Kriterien erfüllen müssen.

In einer weiteren Ausführungsform umfasst die Vorrichtung mindestens eine Dosiervorrichtung, wobei die Belegkomponente von der Dosiervorrichtung dosierbar ist. Hierdurch ergibt sich in vorteilhafter Weise, dass der Fliehkraftabscheider genau eine vorbestimmte Menge der Belegkomponente auf das Lebensmittel aufbringt, wobei die vorbestimmte Menge durch die Dosiervorrichtung dosiert wird. Sind z.B. Käsespäne auf Pizza aufzubringen, so liegt die vorbestimmte Menge, die durch die Dosiervorrichtung dosiert wird, zwischen 40 g und 80 g. Weiter ergibt sich in vorteilhafter Weise eine höhere Integration von zum Belegen eines Lebensmittels mit Belegkomponenten notwendigen Arbeitsschritten.

In einer möglichen Ausführungsform kann die Dosiervorrichtung beispielsweise einen Kolben oder eine Dosierschnecke oder einen Schneckenförderer oder einen Spindelförderer umfassen oder als Kolben,Dosierschnecke, Schneckenförderer oder Spindelförderer ausgebildet sein. Auch kann die Dosiervorrichtung eine Waage oder Wägevorrichtung umfassen oder als Waage oder Wägevorrichtung ausgebildet sein.

Ist die Dosiervorrichtung als Dosierschnecke ausgebildet, so ergibt sich eine vorbestimmte Menge der Belegkomponente aus der Ausführung der Schnecke und der Anzahl von Umdrehungen. Hierbei kann die Schnecke der Dosierschnecke als Blattschnecke oder Spiralschnecke ausgeführt sein. Hierdurch ergibt sich in vorteilhafter Weise eine volumenorientierte und damit auch bei stationären Betriebsbedingungen gewichtsgenaue Dosierung der Belegkomponente.

Die Zuführung der undosierten Belegkomponenten zur Dosiervorrichtung, insbesondere zur Dosierschnecke, kann hierbei mittels eines Förderbandes erfolgen, welches die undosierte Belegkomponente in einen Zuführschacht zur Dosiervorrichtung transportiert. Im Zuführschacht kann z.B. eine Füllstandskontrolle des Zuführschachtes erfolgen, wobei in AbhängigKeit des Füllstandes eine Bewegung des Förderbandes, welches die undosierte Belegkomponente fördert, gesteuert werden kann. Zwischen Zuführschacht und Dosiervorrichtung, welches insbesondere als Dosierschnecke ausgebildet ist, kann zusätzlich noch ein Rakelwerk angeordnet sein, mittels dessen eine gleichmäßige Verteilung der undosierten Belegkomponenten, z.B. im Zuführschacht, z.B. in Längsrichtung der Dosierschnecke ermöglicht wird. Zusätzlich verhindert das Rakelwerk eine so genannte Brückenbildung der Belegkomponente, also das Entstehen von Hohlräumen innerhalb der im Zuführschacht enthaltenen Belegkomponente durch Abtransport der Belegkomponente mittels der Dosierschnecke.

In einer weiteren Ausführungsform umfasst die Dosiervorrichtung einen Kolben oder eine Dosierschnecke oder ist als Kolben oder Dosierschnecke ausgebildet, wobei ein Ende der Dosierschnecke von einem Fluid des Fluid-Masse-Stroms anströmbar ist. Hierdurch ist in vorteilhafter Weise ein Fluid-Masse-Strom mit einer vorbestimmten Menge der Belegkomponente erzeugbar. Die vorbestimmte Menge der Belegkomponente wird hierbei durch die Dosierschnecke dosiert und durch das, das Ende der Dosierschnecke anströmende, Fluid, beispielsweise Luft, in den Fluidstrom integriert, wodurch der Fluid-Masse-Strom entsteht. Hierbei kann der Fluidstrom und/oder die Dosiervorrichtung, insbesondere die Dosierschnecke, getaktet betrieben werden. Z.B. kann die Dosierschnecke und/oder der Fluidstrom in einem Takt getaktet werden, wobei der Takt auf eine Zeitdauer abgestimmt ist, in der zwei aufeinander folgende und zu belegende Lebensmittel unter dem Fliehkraftabscheider angeordnet werden. So ist vorstellbar, den Takt des Fluidstroms und/oder der Dosierschnecke an die Fördergeschwindigkeit eines Förderbandes unter Berücksichtigung der Abstände zwischen zwei aufeinander folgenden, auf dem Förderband geförderten, Lebensmitteln abzustimmen. Hierbei kann eine zeitliche Taktung des Fluidstroms und/oder der Dosiervorrichtung, insbesondere der Dosierschnecke, auch in Abhängigkeit einer Transportzeit des Fluid-Massestroms von der Dosiervorrichtung zum Auslassabschnitt oder Mundstück des Fliehkraftabscheiders erfolgen.

Auch kann nur die Dosierschnecke in einem getakteten Betrieb betrieben werden. Hierbei wird das Ende der Dosierschnecke kontinuierlich von dem Fluidstrom angeströmt, wobei der Fluidstrom nur dann die von der Dosierschnecke dosierte Belegkomponente integriert, d.h. einen Fluid-Masse-Strom bildet, wenn die Dosierschnecke betrieben wird.

Die Dosierschnecke kann hierbei als Vollschnecke ausgebildet sein.

In einer weiteren Ausführungsform ist die Dosierschnecke jedoch als spiralförmiger Spindelförderer (Spiralförderer) ausgebildet. Im Gegensatz zur Vollschnecke weist der Spindelförderer einen innerhalb der Spirale angeordneten zylinderförmigen Hohlraum auf. Die Spirale weist hierbei eine vorbestimmte Steghöhe auf, beispielsweise eine Steghöhe von ca. 8mm auf. Die Steghöhe bezeichnet hierbei eine Höhe der Spirale in radialer Richtung der Spirale. Die Steghöhe kann aber auch in Abhängigkeit einer Größe der zu fördernden Belegkomponente, insbesondere einer Größe von einzelnen Partikeln der Belegkomponente, gewählt werden.

Weiter vorzugsweise weist die Spirale auf der Zuführseite der Belegkomponente eine kleinere Steigung auf als auf der Abwurfseite. Die Steigung nimmt somit von der Zuführseite hin zur Abwurfseite zu.

Die Spirale kann hierbei innerhalb eines Rohres angeordnet sein, wobei die Spirale quasibündig an einer Innenseite des Rohres angeordnet sein kann. Die Steigung der Spirale kann sich hierbei derart verändern, dass im Bereich der Abwurfseite ein vorbestimmter Füllstand des Rohres , beispielsweise ungefähr 50%, erreicht wird. Hierbei kann der Füllstand im Bereich der Zuführseite größer sein als der Füllstand im Bereich der Abwurfseite.In einer weiteren Ausführungsform erfolgt das Zuführen der vorbestimmten Menge der Belegkomponente in den Fluidstrom zur Bildung des Fluid-Masse-Stroms über ein T-Stück. Hierbei kann das T-Stück drei Abschnitte aufweisen. Über eine Öffnung
eines ersten Abschnitts (erste Einlassöffnung des T-Stücks) kann der Fluidstrom, beispielsweise der Luftstrom, in das T-Stück einströmen. Über eine erste Öffnung des zweiten Abschnitts (zweite Einlassöffnung des T-Stücks) kann die Belegkomponente in das T-Stück eingeführt werden. Über eine zweite Öffnung des zweiten Abschnitts kann die Belegkomponente dem Fluidstrom zugeführt werden. Über eine Öffnung des dritten Abschnitts (Auslassöffnung des T-Stücks) kann der Fluid-Masse-Strom aus dem T-Stück ausströmen.

Der erste, der zweite und der dritte Abschnitt können hierbei rohrförmig sein. Die Rohre können hierbei auf einer Innenseite der Rohre eine Teflonbeschichtung aufweisen oder als so genannte POM-Rohre ausgeführt sein.

Die Dosierschnecke,insbesondere der Spiralförderer, kann z.B. zumindest teilweise Im zweiten Abschnitt angeordnet sein.

Auch kann ein Ende der Dosierschnecke derart zum T-Stück angeordnet sein, dass die von der Dosierschnecke geförderte Belegkomponente von der Dosierschnecke in die erste Öffnung des zweiten Abschnitts hineingefördert wird oder hineinfällt. Beispielsweise kann ein Ende der Dosierschnecke derart über der ersten Öffnung des zweiten Abschnitts angeordnet sein, dass die Belegkomponente in den zweiten Abschnitt hineinfällt.

Die Öffnung des ersten Abschnitts und die Öffnung des dritten Abschnitts können beispielsweise an entgegengesetzten Enden eines rohrförmigen Basisabschnitts des T-Stücks angeordnet sein, wobei eine Mittelachse des Basisabschnitts einer Mittelachse des ersten Abschnitts und einer Mittelachse des dritten Abschnitts entspricht. Eine Mittelachse des zweiten Abschnitts kann dann einen vorbestimmten Winkel zur Mittelachse des Basisabschnitts einnehmen, beispielsweise orthogonal zu der Mittelachse des Basisabschnitts sein.

Zur Erhöhung der Strömungsgeschwindigkeit des Fluidstroms in dem T-Stück kann das T-Stück eine Verengung eines Innendurchmessers des Basisabschnitts aufweisen. Vorzugsweise ist eine solche Verengung in Strömungsrichtung des Fluids vor der zweiten Öffnung des zweiten Abschnitts angeordnet. Hierdurch ergibt sich In vorteilhafter Welse eine erhöhte Strömungsgeschwindigkeit und somit eine verbesserte Aufnahme der Belegkomponente in den Fluidstrom.

Weiter kann der zweite Abschnitt fluiddicht verschlossen werden, um ein Ausströmen des durch den ersten Abschnitt einströmenden Fluids durch den zweiten Abschnitt zu verhindern. Eine fluiddichte Abdichtung kann z.B. durch geeignete Dichtelemente oder die Ausführung der Dosierschnecke als Vollschnecke erreicht werden, die bündig mit einer Innenwand des zweiten Abschnitts abschließt und die Belegkomponenten derart verdichtet, dass kein Luftstrom durch den zweiten Abschnitt möglich ist. Eine Dichtung ist insbesondere dann vorzusehen, wenn das T-Stück derart ausgeführt ist, dass der Fluidstrom senkrecht zur Zuführrichtung der Belegkomponente strömt.

Vorzugsweise können jedoch eine Mittelachse des zweiten Abschnitts und eine Mittelachse des ersten Abschnitts in einem spitzen Winkel zueinander angeordnet sein.

Weiter kann der zweite Abschnitt derart am ersten Abschnitt oder dritten Abschnitt angeordnet sein, dass im Bereich der zweiten Öffnung des zweiten Abschnitts eine Strömungsrichtung des strömenden Fluids und eine Förderrichtung der durch den zweiten Abschnitt geförderten Belegkomponente parallel sind oder einen vorbestimmten spitzen, vorzugsweise kleinen, Winkel einnehmen.

Auch kann der zweite Abschnitt zumindest teilweise derart im ersten Abschnitt und/oder dritten Abschnitt angeordnet sein, dass im Bereich der zweiten Öffnung des zweiten Abschnitts eine Strömungsrichtung des strömenden Fluids und eine Förderrichtung der durch den zweiten Abschnitt geförderten Belegkomponente parallel sind oder einen vorbestimmten spitzen, vorzugsweise kleinen, Winkel einnehmen.

Vorzugsweise ist die Dosierschnecke zumindest teilweise in einem rohrförmigen zweiten Abschnitt angeordnet, wobei der zweite Abschnitt zumindest teilweise in einem ebenfalls rohrförmigen dritten Abschnitt angeordnet ist. Hierbei umschließt also der rohrförmige ausgebildete dritte Abschnitt den rohrförmig ausgebildeten zweiten Abschnitt, wobei eine Mittelachse des zweiten und des dritten Abschnitts parallel sind, wobei der zweite und dritte Abschnitt konzentrisch oder exzentrisch zueinander angeordnet sein können. In Strömungsrichtung des Fluids vor der zweiten Öffnung des zweiten Abschnitts ist am dritten Abschnitt ein ebenfalls rohrförmiger erster Abschnitt angeordnet. Hierbei nehmen die Strömungsrichtung des strömenden Fluids im ersten Abschnitt und eine Förderrichtung der durch den zweiten Abschnitt geförderten Belegkomponente einen spitzen Winkel ein. Das Fluid strömt in Strömungsrichtung des Fluids um eine vorbestimmte Distanz vor der zweiten Öffnung des zweiten Abschnitts derart in den dritten Abschnitt ein, dass die Strömungsrichtung des dann im dritten Abschnitt strömenden Fluids und eine Förderrichtung der durch den zweiten Abschnitt geförderten Belegkomponente parallel sind. Hierdurch ergibt sich in vorteilhafter Weise eine besonders vollständige Integration der Belegkomponente in den Fluidstrom.

Hierbei kann der erste Abschnitt in Strömungsrichtung des Fluids vor der zweiten Öffnung des zweiten Abschnitts am dritten Abschnitt derart angeordnet sein, dass die Strömungsrichtung des strömenden Fluids im ersten Abschnitt und eine Förderrichtung der durch den zweiten Abschnitt geförderten Belegkomponente parallel sind. Insbesondere können der erste und der dritte Abschnitt Abschnitte eines gemeinsamen Rohres sein, in welche der rohrförmige zweite Abschnitt hineinragt.

Vorzugsweise ist ein zwischen einer Außenwand des zweiten Abschnitts und einer Innenwand des dritten Abschnitts angeordneter oberer Teilbereich des dritten Abschnitts, beispielsweise der in der oberen Hälfte des dritten Abschnitts angeordnete Teilbereich des dritten Abschnitts, abgedichtet, wobei der erste Abschnitt in Strömungsrlchtung des Fluids vor der zweiten Öffnung des zweiten Abschnitte derart am dritten Abschnitt angeordnet ist, dass das Fluid in den verbleibenden unteren Teilbereich des dritten Abschnitts, belspielsweise den in der unteren Hälfte des dritten Abschnitts angeordneten Teilbereich des dritten Abschnitts, einströmt. Hierbei sind die Begriffe "oben" und "unten" in Relation zu einer Richtung der Schwerkraft zu verstehen. Hierdurch ergibt sich in vorteilhafter Weise, dass das Fluid derart im dritten Abschnitt strömt, dass die Belegkomponente durch die zweite Öffnung des zweiten Abschnitts durch Wirkung der Schwerkraft in den größtenteils unterhalb der geförderten Belegkomponente strömenden Fluidstrom hineinfällt. Weiter ergibt sich in vorteilhafter Weise, dass ein zur Integration nicht geeigneter, oberhalb der geförderten Belegkomponenten strömender, Fluidstrom vermieden wird.

In einer weiteren Ausführungsform umfasst die Vorrichtung mindestens eine Transportvorrichtung, in der die Belegkomponente oder der die Belegkomponente enthaltende Fluid-Masse-Strom transportierbar ist. wobei die Transportvorrichtung die Dosiervorrichtung oder das T-Stück mit dem Einlassabschnitt verbindet. Die Transportvorrichtung kann hierbei beispielsweise als Schlauch, vorzugsweise als Gummischlauch, oder Rohr ausgeführt sein. Werden z.B. Käsespäne zum Belegen von Pizza transportiert, so weist der Schlauch vorzugsweise einen Innendurchmesser von 60 mm auf. Hierdurch ergibt sich in vorteilhafter Weise, dass die Dosiervorrichtung entfernt von dem Fliehkraftabscheider angeordnet werden kann. Hierdurch können beispielsweise Hygienevorschriften für die Lebensmittelindustrie eingehalten werden. Beispielsweise kann der Fluidstrom in einen Schlauch strömen und die Belegkomponente kann wie vorhergehend geschildert über ein T-Stück dem Fluidstrom zugeführt werden. Hierbei wird das T-Stück beispielsweise zwischen zwei Schlauchabschnitten angeordnet, wobei ein erster Schlauchabschnitt an die Öffnung des ersten Abschnitts des T-Stücks anschließt und ein zweiter Schlauchabschnitt an die Öffnung des dritten Abschnitts des T-Stücks anschließt.

Auch ist vorstellbar, dass die Belegkomponente mittels des Fluidstroms in einen Schlauch eingeblasen wird. Hierbei kann der Schlauch z.B. einen Einblasabschnitt aufweisen, der eine Öffnung mit einem größeren Radius als der Schlauch aufweist.

In einer weiteren Ausführungsform umfasst die Vorrichtung mindestens eine Vorrichtung zur Änderung der Dichte der Belegkomponente und/oder der Dichte des Fluid-Masse-Stroms. Hierdurch wird in vorteilhafter Weise ermöglicht, dass die Belegkomponente z.B. aufgelockert werden kann. Hierdurch kann z.B. ein Verkleben oder Verklumpen der Belegkomponente verhindert werden. Die Vorrichtung zur Änderung der Dichte kann hierbei beispielsweise als Rakelwerk ausgeführt sein.

Die Vorrichtung zur Änderung der Dichte kann beispielsweise vor oder hinter der Dosiervorrichtung angeordnet sein. Auch ist vorstellbar, dass die Vorrichtung zur Änderung der Dichte ein Teil der Transportvorrichtung ist oder hinter der Transportvorrichtung angeordnet ist.

Ist die Vorrichtung zur Änderung der Dichte beispielsweise vor der Zuführung der Belegkomponente in den Fluidstrom angeordnet, so wird in vorteilhafter Weise erreicht, dass eine bereits aufgelockerte Belegkomponente in dem Fluid-Masse-Strom transportiert wird.

In einer weiteren Ausführungsform Ist die Vorrichtung zur Änderung der Dichte der Belegkomponente als Lochplatte ausgebildet, wobei die Belegkomponente durch Löcher der Lochplatte förderbar ist. Hierbei kann die Belegkomponente beispielsweise durch voneinander beabstandete Löcher der Lochplatte gepresst werden. Die Löcher der Lochplatte können beispielsweise kreis- oder halbmondförmig ausgebildet sein. Hierdurch lässt sich in vorteilhafter Weise eine gewünschte Stückgröße der Belegkomponente, beispielsweise eine gewünschte Größe der Käsespäne herstellen.

Die Anordnung der Löcher in der Lochplatte sorgt dabei für eine Auflockerung der Belegkomponente.

In einer weiteren Ausführungsform umfasst die Änderung der Dichte der Belegkomponente eine Abschneidevorrichtung, wobei die durch die Löcher der Lochplatte geförderte Belegkomponente durch die Abschneidevorrichtung abschneidbar ist. Die Abschneidevorrichtung kann hierbei beispielsweise als Draht ausgebildet sein, wobei der Draht auf einer Seite der Lochplatte entlang der Oberfläche der Lochplatte führbar ist. Hierbei ist vorstellbar, dass der Draht z.B. aktorgestützt geführt wird. Hierdurch ergibt sich in vorteilhafter Weise, dass die Belegkomponente in Stücke der Belegkomponente, beispielsweise Späne, aufgebrochen werden kann.

Die Vorrichtung zur Änderung der Dichte kann beispielsweise auch derart angeordnet sein, dass die in der Dichte geänderte Belegkomponente dem der Dosierschnecke zugeordneten und vorhergehend erwähnten Zuführschacht zugeführt wird oder in diesen hineinfällt.

In einer weiteren Ausführungsform ist die Vorrichtung zur Änderung der Dichte am Ende der Dosierschnecke angeordnet. Ist die Vorrichtung zur Änderung der Dichte beispielsweise als Lochplatte ausgeführt, so wird eine vorbestimmte Menge der Belegkomponente, die durch die Dosiervorrichtung dosiert wurde, gegen die Lochplatte und durch die Löcher der Lochplatte gepresst. Die durch die Löcher der Lochplatte gepresste Belegkomponente kann zusätzlich durch die Abschneidevorrichtung abgeschnitten werden. Hierdurch ergibt sich in vorteilhafter Weise, dass genau eine vorbestimmte Menge der Belegkomponente in Stücke der Belegkomponente, z.B. Späne, aufgebrochen werden kann.

In einer weiteren Ausführungsform ist mindestens eine Seite der Lochplatte von dem Fluid des Fluid-Masse-Stroms anströmbar. Hierdurch ergibt sich in vorteilhafter Weise, dass die durch die Löcher der Lochplatte geförderte Belegkomponente dem Fluidstrom zur Bildung eines Fluid-Masse-Stroms zuführbar ist.

Weiter kann die gesamte Vorrichtung oder können einzelne Teile der Vorrichtung möglichst wartungs- und reinigungsoptimal ausgeführt werden. Beispielsweise kann hierfür das Auftreten von Sacklöchern, von Nuten, von Unterschneidungen und ähnlichen Elementen vermieden werden, In welchen slch das Lebensmittel, insbesondere die Belegkomponente, absetzen kann.

Weiter betrifft die Erfindung ein Verfahren zum Belegen zumindest eines Abschnitts eines Lebensmittels mit mindestens einer Belegkomponente, wobei mindestens eine Aufbringvorrichtung mindestens eine vorzugsweise vorbestimmte Menge der Belegkomponente auf den Abschnitt des Lebensmittels aufbringt, wobei das Lebensmittel auf einer Auflage und die Aufbringvorrichtung über der Auflage angeordnet sind, wobei der Aufbringvorrichtung die mindestens eine Belegkomponente über einen Einlassabschnitt zugeführt wird, wobei der Aufbringvorrichtung mindestens ein die Belegkomponente enthaltender Fluid-Masse-Strom zugeführt wird und die Aufbringvorrichtung die Belegkomponente aus dem Fluid-Masse-Strom abscheidet.

In einer weiteren Ausführungsform wird der Fluid-Masse-Strom der Aufbringvorrichtung in einem vorbestimmten Winkel zu einer vertikalen Zentralachse der Aufbringvorrichtung zugeführt.

In einer weiteren Ausführungsform wird die Aufbringvorrichtung und/oder ein Auslassabschnitt der Aufbringvorrichtung mit mindestens einem Bewegungsfreiheitsgrad gemäß einer vorbestimmten Bahnplanung relativ zur Auflage bewegt.

In einer weiteren Ausführungsform wird die Aufbringvorrichtung und/oder der Auslassabschnitt mittels mindestens eines Aktors bewegt.

In einer weiteren Ausführungsform dosiert eine Dosiervorrichtung die vorbestimmte Menge der Belegkomponente.

In einer weiteren Ausführungsform ist die Dosiervorrichtung als Dosierschnecke ausgebildet oder umfasst die Dosiervorrichtung eine Dosierschnecke, wobei ein Fluidstrom ein Ende der Dosierschnecke anströmt.

In einer weiteren Ausführungsform wird die vorbestimmte Menge der Belegkomponente dem Fliehkraftabscheider mittels mindestens einer Transportvorrichtung zugeführt, wobei die Transportvorrichtung die Dosiervorrichtung und die Aufbringvorrichtung verbindet.

In einer weiteren Ausführungsform wird die Dichte der Belegkomponente mittels einer Vorrichtung zur Änderung der Dichte der Belegkomponente und/oder der Dichte des Fluid-Masse-Stroms verringert.

In einer weiteren Ausführungsform wird die Dichte der vorbestimmten Menge mittels einer Lochplatte verringert, wobei die Belegkomponente durch Löcher der Lochplatte gefördert wird.

In einer weiteren Ausführungsform wird eine durch die Löcher der Lochplatte geförderte Belegkomponente von einer Abschneidevorrichtung abgeschnitten.

In einer weiteren Ausführungsform wird mindestens eine Seite der Lochplatte von einem Fluid des Fluid-Masse-Stroms angeströmt.

So ist es insbesondere möglich, dass die Dosierschnecke die Belegkomponente dosiert, die Belegkomponente von einer ersten Seite der am Ende der Dosierschnecke angeordneten Lochplatte durch die Löcher auf eine zweite Seite der Lochplatte gefördert wird, eine Abschneidevorrichtung die durch die Löcher der Lochplatte geförderte Belegkomponente abschneidet und ein Fluidstrom die zweite Seite der Lochplatte anströmt, so dass ein Fluid-Masse-Strom gebildet wird.

Die Erfindung ermöglicht hierbel, neben Käsespänen oder Käsegranulat auch die Aufbringung von gegebenenfalls dosierbaren Gütern wie z.B. Chili, Pilzen, Thunfischstücken, gefrorenem Hackfleisch, Obst- oder Gemüsestücken, Zucker, Puderzucker oder Mehl.

Die Erfindung wird anhand von Ausführungsbeispielen näher erläutert. Die Figuren zeigen:
- Fig. 1:: eine Seitenansicht einer Vorrichtung zum Belegen eines Lebensmittels,
- Fig. 2:: eine perspektivische Ansicht einer alternativen Vorrichtung zum Belegen eines Lebensmittes,
- Fig. 3:: eine schematische Ansicht eines Fliehkraftabscheiders,
- Fig. 4:: alternative Ausführungsformen eines Auslassabschnitts eines Fliehkraftabscheiders,
- Fig. 5a:: eine schematische Darstellung einer Bewegung eines gesamten Fliehkraftabscheiders,
- Fig. 5b:: eine schematische Darstellung einer Bewegung eines Auslassabschnltts eines Fliehkraftabscheiders,
- Fig. 6:: eine Seitenansicht eines T-Stücks,
- Fig. 7:: eine schematische Darstellung eines Mundstücks und
- Fig. 8a:: eine schematische Darstellung einer Bewegung über einer Pizza,
- Fig. 8b:: eine schematische Darstellung einer Bewegung über einem Förderband und

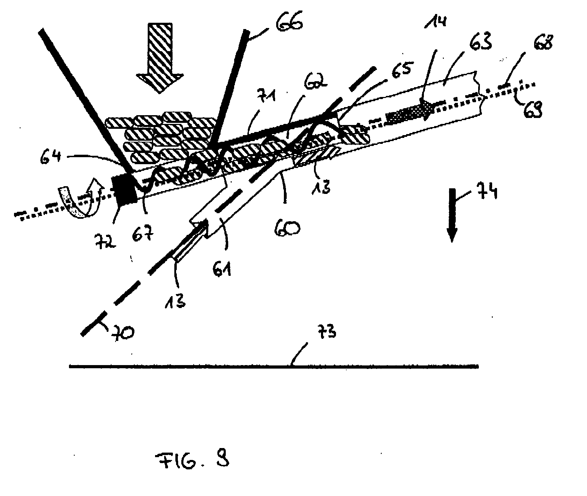

- Fig. 9;: eine Seitenansicht eines weiteren T-Stücks.

Nachfolgend bezeichnen gleiche Bezugszeichen Merkmale der Erfindung mit gleicher technischer Funktion.

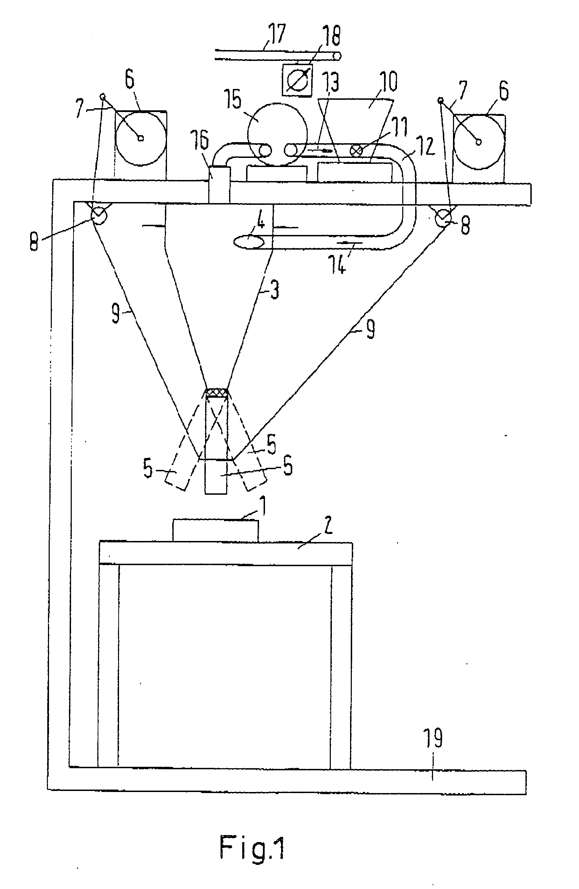

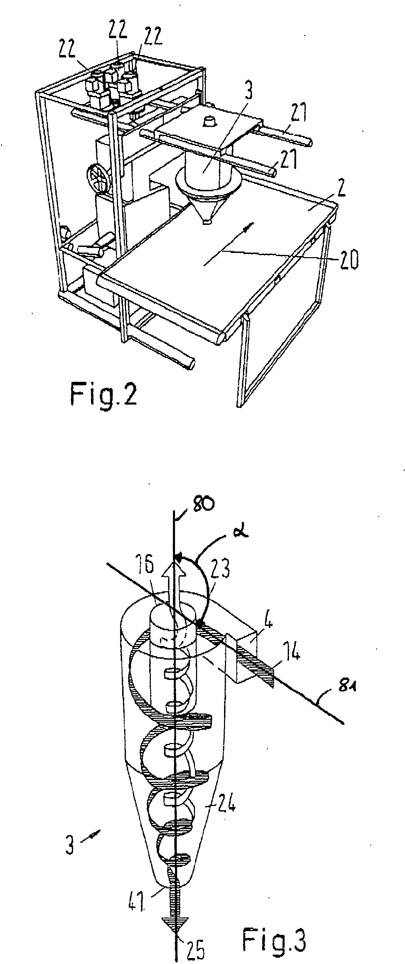

Fig. 1 zeigt eine Seitenansicht einer Vorrichtung zum Belegen eines Lebensmittels 1, beispielsweise einer Pizza. Die Vorrichtung umfasst einen Fliehkraftabscheider 3, wobei der Fliehkraftabscheider 3 über einer Auflage 2 und über einem auf der Auflage 2 angeordneten Lebensmittel 1 angeordnet ist. Der Fliehkraftabscheider 3 weist einen Einlassabschnitt 4 und einen Auslassabschnitt 5 auf. Der Auslassabschnitt 5 ist hierbei bewegbar ausgebildet. Eine Bewegung des Auslassabschnitts 5 wird durch Aktoren 6 bewirkt, die über Stäbe 7 und von Umlenkrollen 8 umgelenkte Seile 9 mit dem Auslassabschnitt 5 verbunden sind. In Fig. 1 ist hierbei dargestellt, dass der Auslassabschnitt 5 mittels zweier Aktoren 6 über der Auflage 2 und dem auf der Auflage 2 angeordneten Lebensmittel 1 hin und her geschwenkt werden kann, wobei der Fliehkraftabscheider eine Pendelbewegung mit vorbestimmtem Amplitudenverlauf und vorbestimmter Frequenz ausführt. Der Fliehkraftabscheider 3 wird in Fig. 3 näher beschrieben. Weiter umfasst die Vorrichtung eine Dosiervorrichtung 10 mit einer Dosierschnecke 11 und eine als Schlauch 12 ausgebildete Transportvorrichtung. Ein Ende der Dosierschnecke 11 ist mit dem Schlauch 12 derart verbunden, dass die Dosierschnecke 11 einem im Schlauch strömenden Fluidstrom 13 eine vorbestimmte Menge einer Belegkomponente, beispielsweise Käse oder Käsespäne, zuführen kann. Durch die Zuführung der Belegkomponente in den Fluidstrom 13 entsteht ein Fluid-Masse-Strom 14. Der Schlauch 12 verbindet hierbei die Dosiervorrichtung 10 mit dem Einlassabschnitt 4 des Fliehkraftabscheiders 3. Eine Pumpe 15 fördert den Fluidstrom 13 zur Dosiervorrichtung 10 und den Fluid-Masse-Strom 14 von der Dosiervorrichtung 10 zum Fllehkraftabscheider 3. Der Fliehkraftabscheider 3 führt die Belegkomponente aus dem Fluid-Masse-Strom 14 ab. Hierbei wird das Fluid des Fluid-Masse-Stroms 14 oder zumindest Teile davon über ein Tauchrohr 16 des Fliehkraftabscheiders 3 aus dem Fliehkraftabscheider 3 nach oben abgeführt. Die aus dem Fluid-Masse-Strom 14 abgeschiedene Belegkomponente fällt durch den Auslassabschnitt 5 aus dem Fliehkraftabscheider 3 auf das auf der Auflage 2 angeordnete Lebensmittel 1. In Fig. 1 ist dargestellt, dass das über das Tauchrohr 16 aus dem Fliehkraftabscheider 3 abgeführte Fluid wiederum der Pumpe 15 zugeführt wird. Hiermit ergibt sich ein Fluidkreislauf, in welchem in vorteilhafter Weise das Fluid wiederverwendbar ist. Hierbei ist vorstellbar, dass im Fluidkreislauf zusätzlich Elemente zur Entfeuchtung und Elemente zur Filterung anordenbar sind. Durch die mittels der Aktoren 6 bewirkte Bewegung des Auslassabschnitts 5 ist es möglich, die aus dem Auslassabschnitt 5 des Fliehkraftabscheiders 3 herausfallende Belegkomponente in einer vorbestimmten Weise auf dem Lebensmittel 1 zu verteilen. Weiter zeigt Fig. 1 eine Zuführvorrichtung 17, über die die Belegkomponente der Dosiervorrichtung 10 zugeführt wird. Die Zuführvorrichtung 17 weist hierbei eine Wägevorrichtung 18 auf, mittels derer der Dosiervorrichtung 10 eine vorbestimmte Masse der Belegkomponente zugeführt werden kann. Die Vorrichtung, insbesondere der Fliehkraftabscheider 3, die Aktoren 6, die Dosiervorrichtung 10 und die Pumpe 15 sind an einem C-förmigen Montagegestell 19 befestigt.

Fig. 2 zeigt eine zweite Ausführungsform der Vorrichtung zum Belegen eines Lebensmittels 1. Hierbei ist die Auflage 2 als Förderband mit einer Förderrichtung 20 dargestellt. Der Fliehkraftabscheider 3 ist wiederum über der Auflage 2 angeordnet. In Fig. 2 ist dargestellt, dass der Fliehkraftabscheider 3 über Stäbe oder Stangen 21 mit Elektromotoren 22 mechanisch verbunden ist. Mittels der Elektromotoren 22 und der Stangen 21 kann der Fliehkraftabscheider 3 quer zur Förderrichtung 20 über der Auflage 2 hin und her bewegt werden.

In Fig. 3 ist eine schematische Ansicht eines Fliehkraftabscheiders 3 dargestellt. Der Fliehkraftabscheider weist hierbei einen Einlassabschnitt 4 auf, über den beispielsweise ein Fluid-Masse-Strom 14 in den Fliehkraftabscheider 3 einströmt. Der Einlassabschnitt 4 ist hierbei an einem oberen Ende des Fliehkraftabscheiders 3 angeordnet. Der Einlassabschnitt 4 ist weiter derart angeordnet, dass der Fluid-Masse-Strom 14 tangential zu einem Verlauf einer Außenwand 23 des Fliehkraftabscheiders 3 an einer Innenseite der Außenwand 23 entlang strömt. Damit die Belegkomponente an der Innenseite nicht anhaftet, ist an der Innenwand vorzugsweise eine Anti-Haft-Beschichtung vorgesehen. Durch die Schwerkraft wird der Fluid-Masse-Strom 14 nach unten abgelenkt, wobei er weiterhin an der Innenseite der Außenwand 23 entlang strömt. Hierbei beschreibt der Fluid-Masse-Strom 14 eine spiralförmige Bahn. Weiter weist der Fliehkraftabscheider 3 einen Kegelabschnitt 24 auf, der sich von einer oberen Seite des Fliehkraftabscheiders 3 zu einer unteren Seite des Fliehkraftabscheiders 3 hin verjüngt. Die Verjüngung des Kegelabschnitts 24 bewirkt eine schnellere Rotation des Fluid-Masse-Stroms 14 entlang der Innenseite der Außenwand 23. Durch die durch die schnellere Rotation steigenden Fliehkräfte wird die Masse oder die Masseelemente des Fluid-Masse-Stroms 14 stärker in Richtung der Außenwand 23 abgelenkt als das im Fluid-Masse-Strom 14 enthaltene Fluid. Das Fluid wird dann über ein in den Fllehkraftabscheider 3 hineinragendes Tauchrohr 16 nach oben aus dem Fliehkraftabscheider 3 abgeführt. Die Masse bzw. ein resultierender Fluid-Masse-Strom 25 kann dann nach unten aus dem Fliehkraftabscheider 3 herausgeführt werden oder herausfallen. In Fig. 3 ist dargestellt, dass ein resultierender Fluid-Masse-Strom 25 durch eine Öffnung 41 am unteren Ende des Fliehkraftabscheiders 3 aus diesem herausgeführt wird. Wie in Fig. 1 dargestellt, kann an dem unteren Ende des Fliehkraftabscheiders 3 ein Auslassabschnitt 5 angeordnet werden.

In Fig. 3 ist dargestellt, dass der Einlassabschnitt 4 derart ausgebildet und am Fliehkraftabscheider 3 angeordnet ist, dass der Fluid-Masse-Strom 14 dem Fliehkraftabscheider 3 in einem vorbestimmten Winkel α zu einer vertikalen Zentralachse 80 des Fliehkraftabscheiders 3 zugeführt wird. Der vorbestimmte Winkel α liegt hierbei in einem Winkelbereich von 70 ° bis 75 °. Hierbei bezieht sich der vorbestimmte Winkel α auf einen Winkel zwischen einer Hauptrichtung 81 des durch den Einlassabschnitt 4 in den Fliehkraftabscheider 3 einströmenden Fluid-Masse-Stroms 14. Die Hauptrichtung 81 kann hierbei parallel zu einer zentralen Längsachse des Einlassabschnitts 4 verlaufen. Hierbei ist zu beachten, dass die vertikale Zentralachse 80 und die Hauptrichtung 81 in der Regel windschief zueinander sind. Der vorbestimmte Winkel α ist in einem solchen Fall als der Winkel zwischen der vertikalen Zentralachse 80 und einer Geraden definiert, wobei die Gerade parallel zur Hauptrichtung 81 verläuft und die vertikale Zentraiachse 80 in einem gemeinsamen Punkt schneidet.

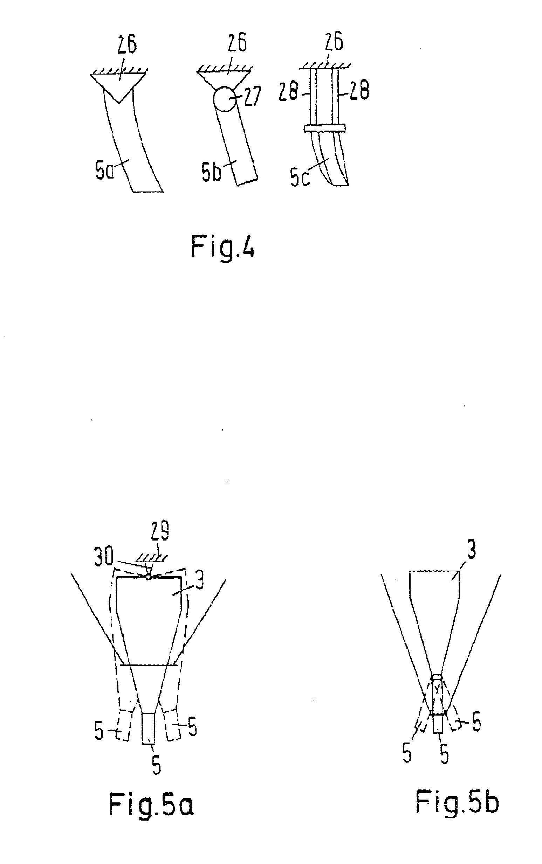

In Fig. 4 sind alternative Ausführungsformen eines Auslassabschnitts 5 schematisch dargestellt. Eine erste Alternative zeigt einen biegeschlaffen Auslassabschnitt 5a, der z.B. aus Gummi hergestellt ist. Hierbei ist dargestellt, dass der Auslassabschnitt 5a elastisch verformbar ist. Ist der biegeschlaffe Auslassabschnitt 5a an einem oberen Ende fest an einer Befestigungsstelle 26, beispielsweise der in Fig. 3 dargestellten Öffnung 41 an dem unteren Ende des Fliehkraftabscheiders 3, befestigt, so kann ein unteres Ende des biegeschlaffen Auslassabschnitts 5a aufgrund der Elastizität des biegeschlaffen Auslassabschnitts 5a bewegt werden. In einer zweiten Alternative ist ein starrer Auslassabschnitt 5b mittels eines Gelenkes/Schwenklagers 27 an der Befestigungsstelle 26 befestigt. Der starre Auslassabschnitt 5b ist hierbei um das Gelenk 27 schwenkbar. In einer dritten Alternative ist ein elastischer Auslassabschnitt 5c mittels Sehnen 28 bewegbar. Die Sehnen 28 sind beispielsweise an einem unteren Ende des elastischen Auslassabschnitts 5c befestigt. Hierbei kann der elastische Auslassabschnitt 5c in mehrere Segmente unterteilt sein. Jede der alternativen Ausführungsformen ermöglicht eine Bewegung des unteren Endes des Auslassabschnitts 5a, 5b, 5c relativ zu einem an der Befestigungstelle 26 befestigten oberen Ende des Auslassabschnitts 5a, 5b, 5c. Hierdurch können Krafteinleitungspunkte an den Auslassabschnitten 5a, 5b, 5c verschieden gewählt werden. Die Wahl des Krafteinleitungspunktes oder der Krafteinleitungspunkte ergibt sich hierbei für den Fachmann gemäß der zu realisierenden Bewegung.

In Fig. 5a und Fig. 5b sind zwei Alternativen zur Veränderung der Position eines Auslassabschnitts 5 eines Fllehkraftabscheiders 3 dargestellt. In Fig. 5a ist dargestellt, dass der gesamte Fliehkraftabscheider 3 drehbar um ein Gelenk/Schwenklager 30 an einer Befestigung 29 befestigt ist, Hierbei kann der gesamte Fliehkraftabscheider 3 um das Gelenk 30 geschwenkt werden. Der Auslassabschnitt ist in diesem Fall vorzugsweise der in Fig. 4 dargestellte starre Auslassabschnitt 5b, dessen Position und Orientierung sich mit der Rotation des Fliehkraftabscheiders 3 um das Gelenk 30 ändert.

In Fig. 5b ist dargestellt, dass nur der Auslassabschnitt 5 bewegbar ist, während der Fliehkraftabscheider 3 positionsfest angeordnet ist. Der Auslassabschnitt 5 kann hierbei beispielsweise als der in Fig 4 dargestellte biegeschlaffe Auslassabschnitt 5a oder der über Sehnen 28 bewegbare Auslassabschnitt 5c ausgeführt sein.

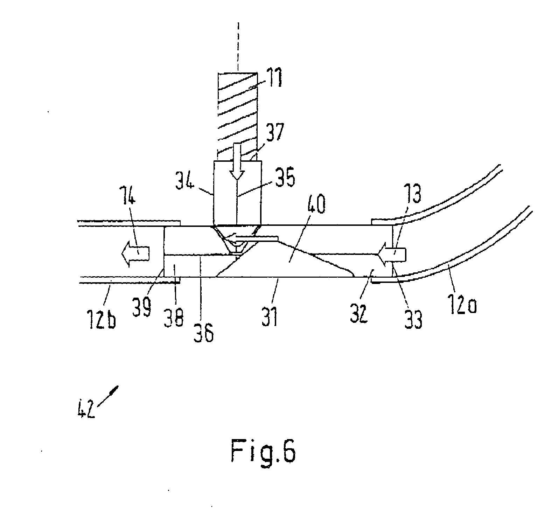

Fig. 6 zeigt eine exemplarische Zuführung einer Belegkomponente in einen Fluidstrom 13 zur Bildung eines Fluid-Masse-Stroms 14. Hierbei ist ein T-Stück 42 zwischen zwei Schlauchabschnitten 12a, 12b angeordnet. Im Schlauchabschnitt 12a wird der Fluidstrom 13 dem T-Stück 42 zugeführt. Hierzu weist ein erstes Ende 32 eines rohrförmigen Basisabschnitts 31 des T-Stücks 42 eine erste Öffnung 33 auf, über die der Fluidstrom 13 in das T-Stück 42 einströmt. Um einen Verlust des Fluids zu vermeiden, wird der Schlauchabschnitt 12a teilweise über das erste Ende 32 des Basisabschnitts 31 geführt. Hierdurch wird eine fluiddichte Verbindung des Schlauchabschnitts 12a und des T-Stücks 42 gewährleistet. Selbstverständlich sind auch weitere fluiddichte Verbindungen zwischen T-Stück 42 und Schlauchabschnitt 12a vorstellbar. Der Basisabschnitt 31 weist entlang seiner Erstreckung einen rohrförmigen Anschluss 34 auf. Eine Zentralachse 35 des Anschlusses 34 verläuft senkrecht zu einer Zentralachse 36 des Basisabschnitts 31. Weiter weist der Anschluss 34 eine zweite Öffnung 37 auf. Durch die zweite Öffnung 37 ragt eine Dosierschnecke 11 in den Anschluss 34, wobei ein Ende der Dosierschnecke 11 im Anschluss 34 angeordnet ist. Weiter weist der Basisabschnitt 31 ein zweites Ende 38 mit einer dritten Öffnung 39 auf. Aus der dritten Öffnung 39 kann dabei ein Fluid-Masse-Strom 14 aus dem T-Stück 42 heraus in den Schlauchabschnitt 12b strömen. Zur Bildung des Fluid-Masse-Stroms 14 fördert die Dosierschnecke 11 eine vorbestimmte Menge der Belegkomponente zu dem nicht dargestellten Ende der Dosierschnecke 11. Das Ende der Dosierschnecke 11 wird von dem durch die erste Öffnung 33 in das T-Stück 42 einströmenden Fluidstrom 13 angeströmt, wobei die Belegkomponente vom unteren Ende der Dosierschnecke 11 in den Fluidstrom 13 aufgenommen wird. Hierdurch entsteht der Fluid-Masse-Strom 14. Zur Erhöhung einer Strömungsgeschwindigkeit des Fluidstroms 13 ist zwischen der ersten Öffnung 33 und dem Anschluss 34 in dem Basisabschnitt 31 eine Verengung 40 angeordnet. Die Verengung 40 verengt hierbei den Innendurchmesser des Basisabschnitts 31, wodurch die Strömungsgeschwindigkeit des Fluidstroms 13 erhöht wird. Eine Erhöhung der Strömungsgeschwindigkeit bewirkt eine verbesserte Integration der Belegkomponente in den Fluidstrom 13, da von einem schnellströmenden Fluidstrom 13 stärkere Kräfte auf die an das Ende der Dosierschnecke 11 geförderte Belegkomponente ausgeübt werden.

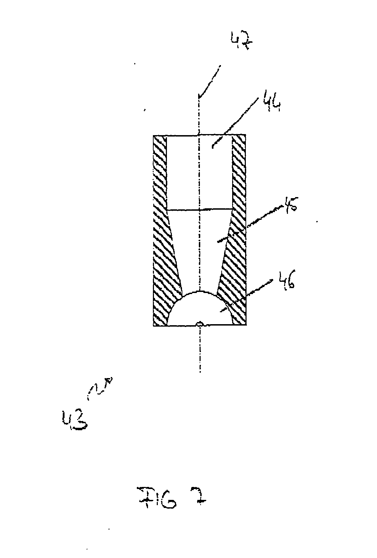

Fig. 7 zeigt eine schematische Ansicht eines Mundstücks 43. Das Mundstück 43 kann an einem unteren Ende der in Fig. 4 dargestellten Auslassabschnitte 5 angeordnet werden oder ein unteres Ende der Auslassabschnitte 5 ausbilden. Das Mundstück 43 weist einen zylinderförmigen Abschnitt 44, einen kegelstumpfförmigen Abschnitt 45 und eine halbkugelförmigen Abschnitt 46 auf. Hierbei weisen der zylinderförmige Abschnitt 44. der kegelstumpfförmige Abschnitt 45 und der halbkugelförmige Abschnitt 46 eine gemeinsame zentrale Längsachse 47 auf. Entlang der Längsachse 47 ist der kegelstumpfförmige Abschnitt 45 nach dem zylinderförmigen Abschnitt 44 und der halbkugelförmige Abschnitt 46 nach dem kegelstumpfförmigen Abschnitt 45 angeordnet, wobei sich der kegelstumpfförmige Abschnitt 45 hin zum halbkugelförmigen Abschnitt 46 verjüngt. Die durch einen Fliehkraftabscheider 3 abgeschiedene Belegkomponente fällt hierbei erst durch den zylinderförmigen Abschnitt 44, dann durch den kegelstumpfförmigen Abschnitt 45 und schließlich durch den halbkugelförmigen Abschnitt 46. Der halbkugelförmige Abschnitt 46 bildet also den einer Auflage 2 zugewandten Teil des Mundstücks 43 aus. Durch die Verwendung des dargestellten Mundstücks 43 kann in vorteilhafter Weise ein Verschleudem, d.h. eine ungewünschte Verteilung der Belegkomponente, die durch hohe Beschleunigungen einer Bewegung des Fliehkraftabscheiders 3 und/oder des Auslassabschnitts 5 verursacht werden, reduziert werden.

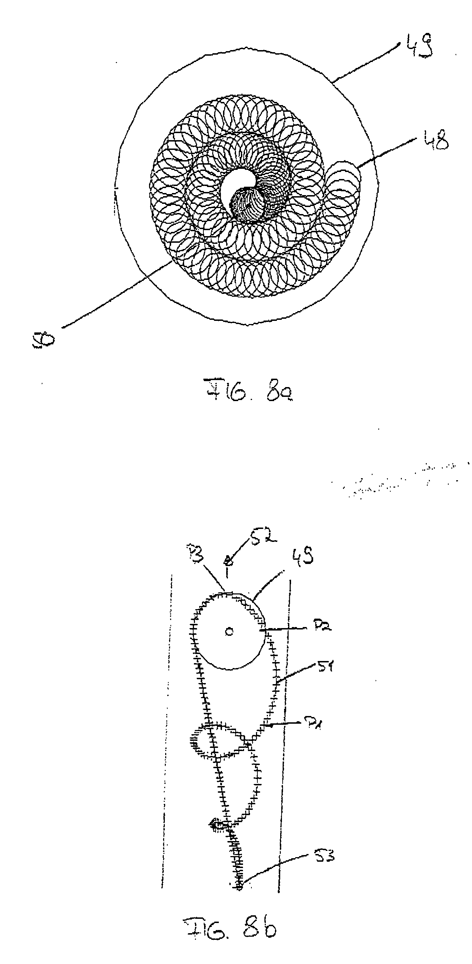

In Fig. 8a ist eine Bahnkurve 48 eines Fliehkraftabscheiders 3 über einem stationären Pizzaboden 49, also einem sich nicht bewegenden Pizzaboden 49, dargestellt. Hierbei kann der Fliehkraftabscheider 3 mit 2 Freiheitsgraden bewegt werden. Die Bahnkurve 48 verläuft hierbei von einem Startpunkt 50 spiralförmig von der Mitte des Pizzabodens 49 hin zu einem äußeren Rand des Pizzabodens 49. Der Startpunkt 50 kann hierbei der Mittelpunkt des kreisförmigen Pizzabodens 49 sein.

In Fig. 8b ist eine zur in Fig. 8a dargestellten Bahnkurve 48 korrespondierende Bahnkurve 51 dargestellt, wobei der Pizzaboden 49 auf einem sich in Pfeilrichtung eines Pfeils 52 bewegenden Förderbands mit einer vorbestimmten konstanten Geschwindigkeit transportiert wird. Hierbei kann der Fliehkraftabscheider 3 ebenfalls mit 2 Freiheitsgraden bewegt werden. Eine Bewegung des Fliehkraftabscheiders 3 beginnt hierbei an einem Startpunkt 53. Hierbei kann eine Zufuhr der Belegkomponente zu einem Fluid-Masse-Strom 14 derart gesteuert werden, dass die Belegkomponente nur in bestimmten Teilen der Bahnkurve 51 auf den Pizzaboden 49 fällt. Beispielsweise kann die Zufuhr der Belegkomponente zu einem Fluid-Masse-Strom 14 derart gesteuert werden, dass zwischen den Punkten P1 und P2 sowie zwischen einem Punkten P3 und dem Endpunkt, der mit dem Startpunkt 53 übereinstimmt, der Bahnkurve 51 keine Belegkomponenten aus dem Fliehkraftabscheider 3 fallen kann.

Fig, 9 zeigt eine Seitenansicht eines weiteren T-Stücks 60. Das T-Stück 60 umfasst einen rohrförmigen ersten Abschnitt 61, einen rohrförmigen zweiten Abschnitt 62 und einen rohrförmigen dritten Abschnitt 63. Der zweite Abschnitt 62 ist hierbei zumindest teilweise im dritten Abschnitt 63 angeordnet. Der zweite Abschnitt 62 weist hierbei eine erste Öffnung 64 und eine zweite Öffnung 65 auf. Über der ersten Öffnung 64 ist ein Zuführschacht 66 angeordnet, über welchen die Belegkomponente dem zweiten Abschnitt 62 zugeführt wird. Im zweiten Abschnitt 62 ist ein Spiralförderer 67 angeordnet. Dieser Spiralförderer 67 weist im Bereich der ersten Öffnung 64 (Zuführseite) eine kleinere Steigung auf als im Bereich der zweiten Öffnung 65 (Abwurfselte).

Über den ersten Abschnitt 61 strömt ein Fluidstrom 13 in das T-Stück 60 ein. Im Bereich der zweiten Öffnung 65 des zweiten Abschnitts 62 nimmt der Fluidstrom 13 die Belegkomponente auf, es entsteht ein Fluid-Masse-Strom 14. Im Bereich der zweiten Öffnung 65 des zweiten Abschnitts 62 sind eine Strömungsrichtung des strömenden Fluids 13 und eine Förderrichtung der durch den zweiten Abschnitt 62 geförderten Belegkomponente parallel.

Eine Mittelachse 68 des zweiten Abschnitts 62 und eine Mittelachse 69 des dritten Abschnitts 63 sind parallel und exzentrisch zueinander angeordnet. Eine Mittelachse 70 des ersten Abschnitts 61 nimmt hierbei einen vorbestimmten spitzen Winkel mit den Mittelachsen 68,69 ein.

Ein zwischen einer Außenwand des zweiten Abschnitts 62 und einer Innenwand des dritten Abschnitts 63 angeordneter oberer Teilbereich des dritten Abschnitts 63 ist mittels einer Dichtung 71 abgedichtet.

Der Spiralförderer 67 wird mit Hilfe einer Klauenkupplung 72 angetrieben. Hierbei ist der Spiralförderer ohne das Lösen weiterer Befestigungsmittel von der Klauenkupplung 72 abnehmbar. In Fig, 9 ist dargestellt, dass die Mittelachse 68 des zweiten Abschnitts 62 einen vorbestimmten kleinen Winkel, beispielsweise 10°, zu einer planen Aufstellfläche 73 der erfindungsgemäßen Vorrichtung einnehmen kann, wobei ein Schwerkraftvektor 74 senkrecht zu dieser planen Aufstellfläche 73 steht. Somit wird der Spiralförderer 67, dessen Mittelachse der Mittelachse 68 entspricht mittels der Schwerkraft gegen die Klauenkupplung 72 gedrückt, wodurch eine Antriebskraft übertragen werden kann. Durch das Verwenden einer Klauenkupplung 72 oder einer formschlüssigen Kupplung ohne zusätzliche Befestlgungselemente wie z.B. Schrauben kann der Spiralförderer 67 in vorteilhafter Weise einfach zu Reinigungszwecken aus dem zweiten Abschnitt 62 entnommen werden.

## Patentansprüche

1. Vorrichtung zum Belegen zumindest eines Abschnitts eines Lebensmittels (1) mit mindestens einer Belegkomponente, umfassend mindestens eine Aufbringvorrichtung, wobei die Aufbringvorrichtung über einer Auflage (2) für das Lebensmittel (1) anordenbar ist, wobei der Aufbringvorrichtung die Belegkomponente über mindestens einen Einlassabschnitt (4) zuführbar ist,
**dadurch gekennzeichnet, dass**
der Aufbringvorrichtung mindestens ein die Belegkomponente enthaltender Fluid-Masse-Strom (14) zuführbar ist und die Aufbringvorrichtung als Fliehkraftabscheider (3) ausgebildet ist.

2. Vorrichtung nach Anspruch 1, **dadurch gekennzeichnet, dass** der Fliehkraftabscheider (3) mindestens einen starren oder flexiblen Auslassabschnitt (5, 5a, 5b, 5c) aufweist.

3. Vorrichtung nach einem der vorangegangenen Ansprüche, **dadurch gekennzeichnet, dass** der Fliehkraftabscheider (3) und/oder der Auslassabschnitt (5) mit mindestens einem Bewegungsfreiheitsgrad bewegbar ist.

4. Vorrichtung nach Anspruch 3, **dadurch gekennzeichnet, dass** die Vorrichtung mindestens einen Aktor (6) umfasst, wobei der Fliehkraftabscheider (3) und/oder der Auslassabschnitt (5) mittels des Aktors (6) bewegbar ist.

5. Vorrichtung nach Anspruch 4, **dadurch gekennzeichnet, dass** die Vorrichtung mindestens ein Kraftübertragungsglied umfasst, wobei das mindestens eine Kraftübertragungsglied (7, 8, 9) eine Kraft zwischen dem Aktor (6) und dem Fliehkraftabscheider (3) und/oder dem Auslassabschnitt (5) überträgt.

6. Vorrichtung nach einem der vorangegangenen Ansprüche, **dadurch gekennzeichnet, dass** das Zuführen einer vorbestimmten Menge der Belegkomponente in einen Fluidstrom (13) zur Bildung des Fluid-Masse-Stroms (14) über ein T-Stück (42, 60) erfolgt.

7. Vorrichtung nach einem der vorangegangenen Ansprüche, **dadurch gekennzeichnet, dass** die Vorrichtung mindestens eine Dosiervorrichtung (10) umfasst, wobei die Belegkomponente von der Dosiervorrichtung (10) dosierbar ist.

8. Vorrichtung nach Anspruch 7, **dadurch gekennzeichnet, dass** die Dosiervorrichtung (10) einen Kolben oder eine Dosierschnecke (11) umfasst oder die Dosiervorrichtung als Kolben oder Dosierschnecke (11) ausgebildet ist, wobei ein Ende des Kolbens oder der Doslerschnecke (11) von einem Fluid des Fluid-Masse-Stroms (14) anströmbar ist.

9. Vorrichtung nach Anspruch 8, **dadurch gekennzeichnet, dass** die Dosierschnecke ein Spiralförderer (67) ist.

10. Vorrichtung nach einem der Ansprüche 6 bis 9, **dadurch gekennzeichnet, dass** ein T-Stück (60) drei Abschnitte (61, 62, 63) aufweist, wobei über eine Öffnung eines ersten Abschnitts (61) ein Fluidstrom (13) in das T-Stück (60) einströmbar ist, wobei über eine erste Öffnung (64) des zweiten Abschnitts (62) eine Belegkomponente in das T-Stück (60) einführbar Ist, wobei über eine zweite Öffnung (65) des zweiten Abschnitts (62) die Belegkomponente dem Fluidstrom (13) zuführbar ist, wobei über eine Öffnung des dritten Abschnitts (63) ein Fluid-Masse-Strom (14) aus dem T-Stück (60) ausströmbar ist.

11. Vorrichtung nach Anspruch 10, **dadurch gekennzeichnet, dass** der zweite Abschnitt (62) zumindest teilweise innerhalb des ersten und/oder dritten Abschnitts (61, 63) angeordnet ist.

12. Vorrichtung nach einem der Ansprüche 10 oder 11, **dadurch gekennzeichnet, dass** die Dosierschnecke zumindest teilweise innerhalb des zweiten Abschnitts (62) angeordnet ist.

13. Vorrichtung nach einem der Ansprüche 7 bis 12, **dadurch gekennzeichnet, dass** die Vorrichtung mindestens eine Transportvorrichtung (12), in der die Belegkomponente oder der die Belegkomponente enthaltende Fluid-Masse-Strom (14) transportierbar ist, umfasst, wobei die Transportvorrichtung (12) die Dosiervorrichtung (10) mit dem Einlassabschnitt (4) verbindet.

14. Vorrichtung nach einem der vorangegangenen Ansprüche, **dadurch gekennzeichnet, dass** die Vorrichtung mindestens eine Vorrichtung zur Änderung der Dichte der Belegkomponente und/oder der Dichte des Fluid-Masse-Stroms (14) umfasst.

15. Verfahren zum Belegen zumindest eines Abschnitts eines Lebensmittels (1) mit mindestens einer Belegkomponente, wobei mindestens eine Aufbringvorrichtung mindestens eine vorzugsweise vorbestimmte Menge der Belegkomponente auf den Abschnitt des Lebensmittels (1) aufbringt, wobei das Lebensmittel (1) auf einer Auflage (2) und die Aufbringvorrichtung über der Auflage (2) angeordnet sind, wobei der Aufbringvorrichtung die mindestens eine Belegkomponente über einen Einlassabschnitt (4) zugeführt wird,
**dadurch gekennzeichnet, dass**
der Aufbringvorrichtung mindestens ein die Belegkomponente enthaltender Fluid-Masse-Strom (14) zugeführt wird und die Aufbringvorrichtung die Belegkomponente aus dem Fluid-Masse-Strom (14) abscheidet.
